# EUROPÄISCHE PATENTSCHRIFT

(11) **EP 3 474 090 B1**
(45) Veröffentlichungstag und Bekanntmachung des Hinweises auf die Patenterteilung: **25.06.2025**
(21) Anmeldenummer: 17020484.6
(22) Anmeldetag: 20.10.2017
(51) Int. Cl.: G05B 13/04, F02D 41/14

(54) **VERFAHREN ZUR REGELUNG EINES PROZESSES INNERHALB EINES SYSTEMS, INSBESONDERE EINES VERBRENNUNGSPROZESSES IN EINEM KESSEL ODER OFEN**
METHOD FOR REGULATING A PROCESS WITHIN A SYSTEM, IN PARTICULAR THE COMBUSTION PROCESS OF A BOILER OR FURNACE
PROCÉDÉ DE RÉGLAGE D'UN PROCESSUS À L'INTÉRIEUR D'UN SYSTÈME, EN PARTICULIER UN PROCESSUS DE COMBUSTION DANS UNE CHAUDIÈRE OU DANS UN FOUR

(43) Veröffentlichungstag der Anmeldung: 24.04.2019
(73) Patentinhaber: aixprocess GmbH, 52070 Aachen (DE)
(72) Erfinder: Weng, Martin, D-52070 Aachen (DE)
(74) Vertreter: Lippert Stachow Patentanwälte Rechtsanwälte Part.mbB

(56) Entgegenhaltungen:
- EP-B1- 1 396 770
- US-A- 5 740 033
- US-A1- 2005 154 477
- US-A1- 2011 060 424
- "Applications of MATLAB in Science and Engineering", 9 September 2011, ISBN: 978-953-30-7708-6, article REZA MOHAMMAD ET AL: "On Fractional-Order PID Design", XP093018924, DOI: 10.5772/22657
- COOPER DOUG ET AL: "Feed Forward Uses Models Within the Controller Architecture", 9 April 2015 (2015-04-09), XP093019312, Retrieved from the Internet <URL:https://controlguru.com/feed-forward-uses-models-within-the-controller-architecture/> [retrieved on 20230131]

## Beschreibung

Die Erfindung betrifft ein Verfahren zur Regelung eines Verbrennungsprozesses in einem Kessel oder Ofen oder eines Mahlprozesses in einer Mahlvorrichtung.

Bei derartigen Verfahren werden Zustandsvariablen des Systems erfasst, vorzugsweise durch Messen von Prozessgrößen im System. Ferner wird ein Prozessmodell erstellt, welches die Auswirkung von Stellaktionen auf die Zustandsvariablen des Systems beschreibt, beispielsweise mittels computergestützter neuronaler Netze. Die Regelung des Prozesses innerhalb des Systems erfolgt durch Ausführen von Stellaktionen unter Berücksichtigung des Prozessmodells und vorgegebenen Regelungszielen.

Bei einem bekannten Verfahren dieser Art werden schlecht oder teuer messbare Prozessgrößen mittels des Prozessmodells im neuronalen Netz vorhergesagt. Um Änderungen des Prozesses folgen zu können, werden zyklisch drei Schritte durchgeführt, nämlich eine Prozessanalyse zur Auffindung eines Ansatzes für das Prozessmodell, ein Training des neuronalen Netzes und die Anwendung des Prozessmodells zur Vorhersage. Dieses Vorgehen ist zeit- und personalaufwendig.

In der US 5,259,064 A wird ein Verfahren beschrieben, bei dem entweder ein für Vorhersagen benutztes neuronales Netz laufend trainiert wird oder von zwei neuronalen Netzen gleicher Struktur eines für Vorhersagen und eines zum Trainieren benutzt wird.

Die US 5,943,660 A zeigt ein Verfahren, bei welchem ausgehend von einem aktuellen Zustand zum Erreichen eines Optimierungsziels ein linearisierter Ansatz für eine Stellaktion verwendet wird, wobei die beiden Linearisierungskoeffizienten hierfür aus je einem neuronalen Netz ermittelt werden.

In der EP 0 609 999 A1 ist ein Verfahren beschrieben, bei dem zum einen für die aktuellen Prozessgrößen im System mittels eines ersten neuronalen Netzes die Steuersignale für die zum Erreichen notwendigen Aktionen ermittelt werden und zum anderen für die gewünschte, gegebenenfalls laufend korrigierten Prozessgrößen im System mittels eines zweiten neuronalen Netzes, welches mit dem ersten neuronalen Netz übereinstimmt, die Steuersignale für die zum Erreichen notwendigen Aktionen ermittelt werden. Die Differenz der beiden Steuersignale wird durch einen Regelkreis reduziert, bis die gewünschten Prozessgrößen auch die aktuellen Prozessgrößen sind.

Aus der EP 1 364 163 B1 ist ein Verfahren zur Regelung eines thermodynamischen Prozesses, insbesondere eines Verbrennungsprozesses bekannt, bei dem der Zustand des Systems gemessen wird, mit Optimierungszielen verglichen wird und zur Regelung geeignete Stellaktionen im System durchgeführt werden, wobei ein von den Optimierungszielen unabhängiges Prozessmodell ermittelt wird, welches die Auswirkung von Aktionen auf den Zustand des Systems beschreibt. Ferner bewertet eine vom Prozessmodell unabhängige Situationsbewertung mittels Gütefunktionen den Zustand des Systems im Hinblick auf die Optimierungsziele.

Aus der EP 1 396 770 B1 ist ein Verfahren zur Regelung eines thermodynamischen Prozesses bekannt, bei dem Prozessgrößen im System gemessen, in einem neuronalen Netz anhand eines trainierten, aktuellen Prozessmodells Vorhersagen berechnet, mit Optimierungsziel verglichen und zur Regelung des Prozesses geeignete Aktionen im System durchgeführt werden, wobei zeitlich parallel der Prozess automatisch analysiert, wenigstens ein neues Prozessmodell gebildet, trainiert und bezüglich der Vorhersage mit dem aktuellen Prozessmodell vergleichen wird.

Der Artikel Reza Mohammad ET AL: "On Fractional-Order PID Design" in "Applications of MATLAB in Science and Engineering", 9. September 2011, XP093018924, ISBN: 978-953-30-7708-6, DOI: 10.5772/22657 und der Artikel Cooper Doug ET AL: "Feed Forward Uses Models Within the Controller Architecture", 9. April 2015, XP093019312, offenbaren jeweils eine Beschreibung eines Systems auf Basis eines Prozessmodells und eines Störungsmodells.

Der vorliegenden Erfindung liegt die Aufgabe zugrunde die Genauigkeit der bekannten Verfahren zu verbessern.

Die Aufgabe wird erfindungsgemäß gelöst durch ein Verfahren mit den Merkmalen des Anspruches 1. Weitere vorteilhafte Ausgestaltungen sind Gegenstand der Unteransprüche. Das erfindungsgemäße Verfahren zur Regelung eines Verbrennungsprozesses in einem Kessel oder Ofen oder eines Mahlprozesses in einer Mahlvorrichtung, umfasst die Schritte:
- Erfassen von Zustandsvariablen (st) des Systems;
- Erstellen mehrerer voneinander unabhängiger Störungsmodelle (SM), welche die Auswirkungen von störungsbedingten Systemänderungen (vt) auf die Zustandsvariablen (st) des Systems beschreiben, wobei beim Regeln (4) des Prozesses innerhalb des Systems das Störungsmodell (SM) berücksichtigt wird, welches aktuell die störungsbedingten Systemänderungen (vt) am besten abbildet;
- Erstellen mehrerer voneinander unabhängiger Prozessmodelle (PM), welchees die Auswirkungen von Stellaktionen (at) auf die Zustandsvariablen (st) des Systems beschreiben, wobei beim Regeln (4) des Prozesses innerhalb des Systems das Prozessmodell (PM) berücksichtigt wird, welches aktuell am besten die Auswirkungen von Stellaktionen (at) auf die Zustandsvariablen (st) des Systems abbildet; und
- Regeln des Prozesses innerhalb des Systems durch Ausführen von Stellaktionen (at) unter Berücksichtigung des Prozessmodells (PM), des Störungsmodells (SM) und vorgegebenen Regelungszielen;

wobei bei dem Erstellen der mehreren voneinander unabhängigen Störungsmodelle (SM) zwischen Auswirkungen von kurzfristigen störungsbedingten Systemänderungen (vt) auf die Zustandsvariablen (st) des Systems und Auswirkungen von längerfristigen störungsbedingten Systemänderungen (vt) auf die Zustandsvariablen (st) des Systems unterschieden wird, wobei die Unterteilung in kurzfristige störungsbedingte Systemänderungen (vt) und längerfristige störungsbedingte Systemänderungen (vt) abhängig von dem zu regelnden Prozess innerhalb des Systems ist und unter Berücksichtigung der Länge des zu regelnden Prozesses in dem System erfolgt; und
wobei die mehreren voneinander unabhängigen Prozessmodelle (PM) mehrere in die Zukunft gerichtete angenommene Auswirkungen von Stellaktionen (at) auf die Zustandsvariablen (st) des Systems berücksichtigen.

Bei den aus dem Stand der Technik bekannten Verfahren wird ein Prozessmodell verwendet, welches die Auswirkungen von Stellaktionen auf die Zustandsvariablen des Systems und gleichzeitig die Auswirkung von störungsbedingten Systemänderung auf die Zustandsvariablen des Systems beschreibt.

Der vorliegenden Erfindung liegt die Erkenntnis zugrunde, dass das Erstellen der Störungsmodelle, welche die Auswirkungen von störungsbedingten Systemänderungen auf die Zustandsvariablen des Systems beschreiben und das Erstellen der separaten Prozessmodelle, welche die Auswirkungen von Stellaktionen auf die Zustandsvariablen des Systems beschreiben, die Genauigkeit des erfindungsgemäßen Verfahrens zur Regelung eines Verbrennungsprozesses in ein Kessel oder Ofen oder eines Mahlprozesses in einer Mahlvorrichtung, signifikant verbessert im Gegensatz zu einem Prozessmodell, welches die Auswirkungen von Stellaktionen auf die Zustandsvariablen des Systems und gleichzeitig die Auswirkungen von störungsbedingten Systemänderungen auf die Zustandsvariablen des Systems beschreibt.

Bei dem erfindungsgemäßen Erstellen der Störungsmodelle wird zwischen Auswirkungen von kurzfristigen störungsbedingten Systemänderungen auf die Zustandsvariablen des Systems und Auswirkungen von längerfristigen störungsbedingten Systemänderungen auf die Zustandsvariablen des Systems unterschieden.

Die Unterteilung in kurzfristige störungsbedingte Änderungen und längerfristigen störungsbedingten Änderungen ist abhängig von dem zu regelnden Prozess innerhalb des Systems. So können bei einem Verbrennungsprozess in einem Kraftwerk kurzfristige Störungsbedingte Änderungen durchaus über mehrere Stunden hinweg auftreten. Die Unterteilung in kurzfristige störungsbedingte Änderungen und längerfristigen störungsbedingten Änderungen erfolgt unter Berücksichtigung der Länge des zu regelnden Prozesses in dem System.

Die erfindungsgemäße Berücksichtigung der Störungsmodelle beim Regeln des Prozesses innerhalb des Systems hat den Vorteil, dass auf das Ausführen von Stellenaktionen gegebenenfalls verzichtet werden kann, falls gemäß dem erstellten Störungsmodell davon auszugehen ist, dass die Auswirkungen der störungsbedingten Systemänderungen auf die Zustandsvariablen des Systems zeitlich begrenzt sind und/oder die Auswirkungen von störungsbedingten Systemänderungen auf die Zustandsvariablen des Systems sich innerhalb eines bestimmten Bereichs bewegen.

Die erfindungsgemäße Berücksichtigung der Prozessmodelle, der Störungsmodelle und der vorgegebenen Regelungsziele beim Regeln des Prozesses innerhalb des Systems erhöht somit signifikant die Genauigkeit des Verfahrens zur Regelung des Prozesses innerhalb des Systems.

Gemäß einer Variante der Erfindung werden die Zustandsvariablen (st) mittels Sensoren des Systems oder manuellen und/oder automatischen Probenauswertungen erfasst. Bevorzugt ist eine Erfassung der Zustandsvariablen (st) mittels Sensoren, da diese kontinuierlich erfolgen kann. Sollten Zustandsvariablen (st) jedoch nicht direkt mit Sensoren erfasst werden können, so müssen manuell und/oder automatisch entnommene Proben ausgewertet werden und dem erfindungsgemäßen Verfahren zur Verfügung gestellt werden.

Gemäß einer bevorzugten Variante der Erfindung werden während der Erstellung der Störungsmodelle (SM) zeitlich zurückliegende störungsbedingte Systemänderungen (vt) zur Integration in einem zeitlichen Kontext berücksichtigt. Die Berücksichtigung von zeitlich zurückliegenden störungsbedingten Systemänderungen bei der Erstellung der Störungsmodelle (SM) resultiert in einer kontinuierlichen Verbesserung der Störungsmodelle (SM).

Nach einer weiteren erfindungsgemäßen Variante werden die Störungsmodelle (SM) kontinuierlich durch Auswirkungen von störungsbedingten Systemänderungen (vt) auf die Zustandsvariablen (st) des Systems angepasst. Durch das kontinuierliche Anpassen der Störungsmodelle durch Auswirkungen von störungsbedingten Systemänderungen auf die Zustandsvariablen des Systems steht dem erfindungsgemäßen Verfahren zu jeder Zeit ein aktuelles Störungsmodell zur Regelung des Prozesses innerhalb des Systems zur Verfügung.

In Verbindung mit der Berücksichtigung der zeitlich zurückliegenden störungsbedingten Systemänderungen bei der Erstellung der Störungsmodelle steht jederzeit ein aktuelles und hinsichtlich der zeitlich zurückliegenden störungsbedingten Systemänderungen ein optimiertes Störungsmodell zur Verfügung.

Nach einer Variante des erfindungsgemäßen Verfahrens werden die Störungsmodelle (SM) mittels eines Probelaufs des Systems und/oder durch Expertenwissen erstellt. Die anfänglich mittels eines Probelaufs des Systems und/oder durch Expertenwissen erstellten Störungsmodelle (SM) können durch kontinuierliche Berücksichtigung von Auswirkungen von störungsbedingten Systemänderungen (vt) auf die Zustandsvarianten (st) des Systems und/oder durch Berücksichtigung von zeitlich zurückliegenden störungsbedingten Systemänderungen (vt) zur Integration in einem zeitlichen Kontext angepasst werden.

In einer weiteren Variante des erfindungsgemäßen Systems werden die Störungsmodelle (SM) mittels eines computergestützten neuronalen Netzwerks erstellt und insbesondere kontinuierlich angepasst (trainiert).

Das neuronale Netzwerk wird dabei insbesondere mittels an sich bekannter evolutionärer Strategien, genetischer Algorithmen, genetischer Programmierung oder evolutionärer Programmierung trainiert, vorzugsweise im Rahmen eines autonomen Auswahl- und/oder Optimierungsprozesses.

Erfindungsgemäß werden mehrere voneinander unabhängige Störungsmodelle (SM) erstellt und beim Regeln des Prozesses innerhalb des Systems wird das Störungsmodell (SM) berücksichtigt, welches aktuell die störungsbedingten Systemänderungen (vt) am besten abbildet. Vorzugsweise werden mehrere computergestützte neuronale Netzwerke für die unabhängigen Störungsmodelle (SM) erstellt. Beim Regeln des Prozesses innerhalb des Systems wird das Störungsmodell (SM) berücksichtigt, welches die besten Resultate für die aktuelle Situation liefert. Je nach aktueller Prozesssituation werden somit die Störungsmodelle (SM) miteinander verglichen und bei der Regelung ein Störungsmodell (SM) ausgewählt.

In einer besonders bevorzugten Variante der Erfindung wird jedes Störungsmodell (SM) zur Vorhersage von einer bestimmten Gruppe von störungsbedingten Systemänderungen (vt) erstellt. Die störungsbedingten Systemänderungen (vt) werden durch die Störungsmodelle (SM) in Gruppen (Cluster) unterteilt und jedes Störungsmodell ist speziell zur Vorhersage von einer bestimmten Gruppe von störungsbedingten Systemänderungen (vt) ausgebildet. Beim Regeln des Prozesses innerhalb des Systems wird das Störungsmodell (SM) berücksichtigt, welches die besten Resultate für die aktuellen störungsbedingten Systemänderungen (vt) liefert.

Treten bei der Regelung des Prozesses innerhalb des Systems störungsbedingte Systemänderungen (vt) auf, die durch keine Gruppe eines der Störungsmodelle (SM) erfasst werden, wird ein neues Störungsmodell (SM) für die neue Gruppe von störungsbedingten Systemänderungen (vt) angelegt und nachfolgend anhand von Messungen und dem Ausführen von Stellaktionen (at) verbessert (trainiert).

Zweckmäßigerweise kann jedem Störungsmodell (SM) bzw. jeder den Störungsmodellen zugehörigen Gruppen (Clustern) ein eindeutiger Identifizierungscode (genetischer Code) zugewiesen werden, um eine Unterscheidung der einzelnen Störungsmodelle (SM) bzw. Gruppen (Cluster) von störungsbedingten Systemänderungen (vt) zu vereinfachen.

Ferner lässt sich vorzugsweise die Güte der einzelnen Störungsmodelle (SM) bzw. der Gruppen (Cluster) von störungsbedingten Systemänderungen (vt) bestimmen und/oder einstellen.

Nach einer weiteren bevorzugten Variante der Erfindung berücksichtigen die Störungsmodelle (SM) mehrere in die Zukunft gerichtete angenommene Auswirkungen von störungsbedingten Systemänderungen (vt) auf die Zustandsvariablen (st) des Systems. Die Störungsmodelle (SM) erzeugen eine Vorhersage für in die Zukunft gerichtete angenommene Auswirkung von störungsbedingten Systemänderung (vt) auf die Zustandsvariablen (st) des Systems und berücksichtigen diese bei der aktuellen Situation des Prozesses innerhalb des Systems.

Nach einer Variante des erfindungsgemäßen Verfahrens werden während der Erstellung der Prozessmodelle (PM) zeitlich zurückliegende Auswirkungen von Stellaktionen (at) auf die Zustandsvariablen (st) des Systems zur Integration in einem zeitlichen Kontext berücksichtigt. Somit werden bei der Erstellung der Prozessmodelle (PM) die aus der Vergangenheit bekannten Auswirkungen von Stellaktionen (at) auf die Zustandsvariablen (st) des Systems berücksichtigt, so dass die Prozessmodelle (PM) fortlaufend unter Berücksichtigung der Vergangenheit verbessert werden.

In einer weiteren erfindungsgemäßen Variante werden die Prozessmodelle (PM) kontinuierlich durch Auswirkungen von Stellaktionen (at) auf die Zustandsvariablen (st) des Systems angepasst. Die Prozessmodelle (PM) werden somit kontinuierlich verbessert. Insbesondere durch eine zusätzliche Berücksichtigung von zeitlich zurückliegenden Auswirkungen von Stellaktionen (at) auf die Zustandsvariablen (st) des Systems werden verbesserte und ständig aktuelle Prozessmodelle (PM) erstellt.

Gemäß einer erfindungsgemäßen Variante werden die Prozessmodelle (PM) mittels eines Probelaufs des Systems mit einem zumindest beispielhaften Ausführen von möglichen Stellaktionen (at) und/oder durch Expertenwissen erstellt. Derartig erstellte Prozessmodelle können nachfolgend durch die Auswirkung von Stellaktionen (at) auf die Zustandsvariablen (st) des Systems kontinuierlich angepasst werden und/oder können zeitlich zurückliegende Auswirkungen von Stellaktionen (at) auf die Zustandsvariablen (st) des Systems bei der Erstellung der Prozessmodelle (PM) berücksichtigt werden.

Nach einer zweckmäßigen Variante der Erfindung werden die Prozessmodelle (PM) mittels eines computergestützten neuronalen Netzwerks erstellt und insbesondere kontinuierlich angepasst (trainiert).

Das neuronale Netzwerk wird dabei insbesondere mittels an sich bekannter evolutionärer Strategien, genetischer Algorithmen, genetischer Programmierung oder evolutionärer Programmierung trainiert, vorzugsweise im Rahmen eines autonomen Auswahl- und/oder Optimierungsprozesses.

Erfindungsgemäß werden mehrere voneinander unabhängige Prozessmodelle (PM) erstellt und beim Regeln des Prozesses innerhalb des Systems wird das Prozessmodell (PM) berücksichtigt, welches aktuell am besten die Auswirkungen von Stellaktionen (at) auf die Zustandsvariablen (st) des Systems abbildet. Insbesondere werden die mehreren voneinander unabhängigen Prozessmodelle (PM) durch unterschiedliche computergestützte neuronale Netzwerke implementiert. Beim Regeln eines Systems mittels des erfindungsgemäßen Verfahrens kann somit das Prozessmodell berücksichtigt werden, welches aktuell die Auswirkungen von Stellaktionen (at) auf die Zustandsvariablen (st) des Systems am besten abbildet.

Nach dem erfindungsgemäßen Verfahren berücksichtigen die Prozessmodelle (PM) mehrere in die Zukunft gerichtete angenommene Auswirkungen von Stellaktionen (at) auf die Zustandsvariablen (st) des Systems. Die Prozessmodelle (PM) berücksichtigen somit eine Vorhersage von angenommenen Auswirkungen von Stellaktionen (at) auf die Zustandsvariablen (st) des Systems.

Die Prozessmodelle (PM) können folglich zeitlich zurückliegende Auswirkungen von Stellaktionen (at) auf die Zustandsvariablen (st) des Systems berücksichtigen, kontinuierlich die Auswirkungen von Stellaktionen auf die Zustandsvariablen (st) des Systems berücksichtigen und ferner eine Vorhersage über in die Zukunft gerichtete angenommene Auswirkungen von Stellaktionen (at) auf die Zustandsvariablen (st) des Systems erstellen und diese ebenfalls berücksichtigen.

Die Erfindung betrifft ferner eine Vorrichtung zur Ausführung eines der vorgenannten Verfahren umfassend ein zu regelndes System mit Sensoren zur Erfassung von Zustandsvariablen (st), Stelleinrichtung zur Ausführung von Stellaktionen (at) und einer mit dem System verbundenen Steuereinrichtung, vorzugsweise einer Recheneinrichtung. Das erfindungsgemäße Verfahren kann beispielsweise durch eine Software auf der Recheneinrichtung implementiert sein.

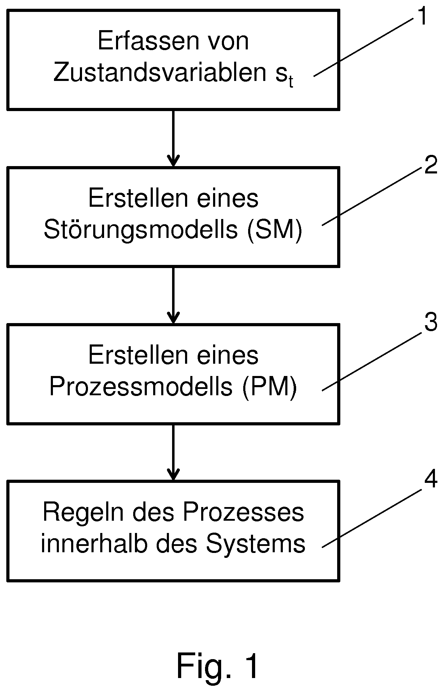

Nachfolgend wird das erfindungsgemäße Verfahren anhand des in der Fig. 1 dargestellten Ausführungsbeispiels näher erläutert.

Es zeigt:
- Fig. 1: Den Ablauf eines erfindungsgemäßen Verfahrens zur Regelung eines Verbrennungsprozesses in einem Kessel oder Ofen.

Fig. 1 zeigt den Ablauf eines erfindungsgemäßen Verfahrens zur Regelung eines Verbrennungsprozesses in einem Kessel oder Ofen.

In einem ersten Schritt werden die Zustandsvariablen (st) des Systems erfasst 1. Die Erfassung 1 der Zustandsvariablen (st) erfolgt mittels Sensoren des Systems oder mittels manueller und/oder automatischer Probenauswertungen.

Bei der Ausführung des erfindungsgemäßen Verfahrens werden mehrere voneinander unabhängige Störungsmodelle (SM) erstellt 2, welche die Auswirkungen von störungsbedingten Systemänderungen (vt) auf die Zustandsvariablen (st) des Systems beschreiben. Die Störungsmodelle (SM) werden beispielsweise mittels eines Probelaufs des Systems und/oder durch Expertenwissen erstellt 2. Bei der Durchführung des erfindungsgemäßen Verfahrens können während der Erstellung 2 der Störungsmodelle (SM) zeitlich zurückliegende störungsbedingte Systemänderungen (vt) zur Integration in einem zeitlichen Kontext berücksichtigt werden. Ferner können die Störungsmodelle (SM) kontinuierlich durch Auswirkung von störungsbedingten Systemänderungen (vt) auf die Zustandsvariablen (st) des Systems angepasst werden.

Die Störungsmodelle (SM) werden beispielsweise mittels eines computergestützten neuronalen Netzwerks erstellt 2 und insbesondere kontinuierlich angepasst.

Erfindungsgemäß werden mehrere voneinander unabhängige Störungsmodelle (SM) erstellt 2 und beim Regeln 4 des Prozesses innerhalb des Systems wird das Störungsmodell (SM) berücksichtigt, welches aktuell die störungsbedingten Systemänderungen (vt) am besten abbildet.

Zur Verbesserung der Genauigkeit des erfindungsgemäßen Verfahrens können die Störungsmodelle (SM) mehrere in die Zukunft gerichtete angenommene Auswirkungen von störungsbedingten Systemänderungen (vt) auf die Zustandsvariablen (st) des Systems berücksichtigen.

In einem weiteren Schritt des erfindungsgemäßen Verfahrens werden mehrere voneinander unabhängige Prozessmodelle (PM) erstellt, welche die Auswirkungen von Stellaktionen (at) auf die Zustandsvariablen (st) des Systems beschreiben.

Die Prozessmodelle (PM) werden beispielsweise mittels eines Probelaufs des Systems mit einem zumindest beispielhaften Ausführen von möglichen Stellaktionen (at) und/oder durch Expertenwissen erstellt 3. Während der Erstellung 3 der Prozessmodelle (PM) werden vorzugsweise zeitlich zurückliegende Auswirkungen von Stellaktionen (at) auf die Zustandsvariablen (st) des Systems zur Integration in einem zeitlichen Kontext berücksichtigt. Ferner werden die Prozessmodelle (PM) vorzugsweise kontinuierlich durch Auswirkungen von Stellaktionen (at) auf die Zustandsvariablen (st) des Systems angepasst.

Zweckmäßigerweise werden die Prozessmodelle (PM) mittels eines computergestützten neuronalen Netzwerks erstellt 3 und insbesondere kontinuierlich angepasst.

Erfindungsgemäß werden mehrere voneinander unabhängige Prozessmodelle (PM) erstellt 3 und beim Regeln des Prozesses innerhalb des Systems wird das Prozessmodell (PM) berücksichtigt, welches aktuell am besten die Auswirkungen von Stellaktionen (at) auf die Zustandsvariablen (st) des Systems abbildet.

Zur weiteren Verbesserung des erfindungsgemäßen Verfahrens berücksichtigen die Prozessmodelle (PM) mehrere in die Zukunft gerichtete angenommene Auswirkungen von Stellaktionen (at) auf die Zustandsvariablen (st) des Systems.

Gemäß dem erfindungsgemäßen Verfahren wird der Prozess innerhalb des Systems durch Ausführen von Stellaktionen (at) unter Berücksichtigung des Prozessmodells (PM), des Störungsmodells (SM) und vorgegebenen Regelungszielen geregelt 4.

### Bezugszeichenliste

- 1: Erfassen von Zustandsvariablen (st)
- 2: Erstellen eines Störungsmodells (SM)
- 3: Erstellen eines Prozessmodells (PM)
- 4: Regeln des Prozesses innerhalb des Systems

## Patentansprüche

1. Verfahren zur Regelung (4) eines Verbrennungsprozesses in einem Kessel oder Ofen oder eines Mahlprozesses in einer Mahlvorrichtung, umfassend die folgenden Schritte:
- Erfassen (1) von Zustandsvariablen (st) des Systems;
- Erstellen (2) mehrerer voneinander unabhängiger Störungsmodelle (SM), welche die Auswirkungen von störungsbedingten Systemänderungen (vt) auf die Zustandsvariablen (st) des Systems beschreiben, wobei beim Regeln (4) des Prozesses innerhalb des Systems ein Störungsmodell (SM) von den mehreren voneinander unabhängigen Störungsmodellen (SM) berücksichtigt wird, welches aktuell die störungsbedingten Systemänderungen (vt) am besten abbildet;
- Erstellen (3) mehrerer voneinander unabhängiger Prozessmodelle (PM), welche die Auswirkungen von Stellaktionen (at) auf die Zustandsvariablen (st) des Systems beschreiben, wobei beim Regeln (4) des Prozesses innerhalb des Systems ein Prozessmodell (PM) von den mehreren voneinander unabhängigen Prozessmodellen (PM) berücksichtigt wird,
welches aktuell am besten die Auswirkungen von Stellaktionen (at) auf die Zustandsvariablen (st) des Systems abbildet; und
- Regeln (4) des Prozesses innerhalb des Systems durch Ausführen von Stellaktionen (at) unter Berücksichtigung des Prozessmodells (PM), des Störungsmodells (SM) und vorgegebenen Regelungszielen;
wobei bei dem Erstellen der mehreren voneinander unabhängigen Störungsmodelle (SM) zwischen Auswirkungen von kurzfristigen störungsbedingten Systemänderungen (vt) auf die Zustandsvariablen (st) des Systems und Auswirkungen von längerfristigen störungsbedingten Systemänderungen (vt) auf die Zustandsvariablen (st) des Systems unterschieden wird, wobei die Unterteilung in kurzfristige störungsbedingte Systemänderungen (vt) und längerfristige störungsbedingte Systemänderungen (vt) abhängig von dem zu regelnden Prozess innerhalb des Systems ist und unter Berücksichtigung der Länge des zu regelnden Prozesses in dem System erfolgt; und
wobei die mehreren voneinander unabhängigen Prozessmodelle (PM) mehrere in die Zukunft gerichtete angenommene Auswirkungen von Stellaktionen (at) auf die Zustandsvariablen (st) des Systems berücksichtigen.

2. Verfahren nach Anspruch 1, wobei die Zustandsvariablen (st) mittels Sensoren des Systems oder manuellen und/oder automatischen Probenauswertungen erfasst (1) werden.

3. Verfahren nach Anspruch 1 oder Anspruch 2, wobei während der Erstellung (2) der Störungsmodelle (SM) zeitlich zurückliegende störungsbedingte Systemänderungen (vt) zur Integration in einem zeitlichen Kontext berücksichtigt werden.

4. Verfahren nach einem der Ansprüche 1 bis 3, wobei die Störungsmodelle (SM) kontinuierlich durch Auswirkungen von störungsbedingten Systemänderungen (vₜ) auf die Zustandsvariablen (st) des Systems angepasst werden.

5. Verfahren nach einem der Ansprüche 1 bis 4, wobei die Störungsmodelle (SM) mittels eines Probelaufs des Systems und/oder durch Expertenwissen erstellt (2) werden.

6. Verfahren nach einem der Ansprüche 1 bis 5, wobei die Störungsmodelle (SM) mittels eines computergestützten neuronalen Netzwerks erstellt (2) werden und insbesondere kontinuierlich angepasst werden.

7. Verfahren nach einem der Ansprüche 1 bis 6, wobei die Störungsmodelle (SM) mehrere in die Zukunft gerichtete angenommene Auswirkungen von störungsbedingten Systemänderungen (vt) auf die Zustandsvariablen (st) des Systems berücksichtigen.

8. Verfahren nach einem der Ansprüche 1 bis 7, wobei während der Erstellung (3) der Prozessmodelle (PM) zeitlich zurückliegende Auswirkungen von Stellaktionen (at) auf die Zustandsvariablen (st) des Systems zur Integration in einem zeitlichen Kontext berücksichtigt werden.

9. Verfahren nach einem der Ansprüche 1 bis 8, wobei die Prozessmodelle (PM) kontinuierlich durch Auswirkungen von Stellaktionen (at) auf die Zustandsvariablen (st) des Systems angepasst werden.

10. Verfahren nach einem der Ansprüche 1 bis 9, wobei die Prozessmodelle (PM) mittels eines Probelaufs des Systems mit einem zumindest beispielhaften Ausführen von möglichen Stellaktionen (at) und/oder durch Expertenwissen erstellt (3) werden.

11. Verfahren nach einem der Ansprüche 1 bis 10, wobei die Prozessmodelle (PM) mittels eines computergestützten neuronalen Netzwerks erstellt (3) werden und insbesondere kontinuierlich angepasst werden.

12. Vorrichtung zur Ausführung des Verfahrens gemäß einem der Ansprüche 1 bis 11 umfassend ein zu regelndes System mit Sensoren zur Erfassung von Zustandsvariablen (st), Stelleinrichtungen zur Ausführung von Stellaktionen (at) und einer mit dem System verbundenen Steuereinrichtung, vorzugsweise einer Recheneinrichtung.

## Claims

1. Method for controlling (4) a combustion process in a boiler or furnace or a grinding process in a grinding device, comprising the following steps:
- capturing (1) of state variables (st) of the system;
- creating (2) multiple, independently from one another, interference models (SM), which describe the effects of interference-based system changes (vt) on the state variables (st) of the system, wherein during the controlling (4) of the process within the system one interference model (SM) of the multiple, independently from one another, interference models (SM) is considered that momentarily best describes the interference-based system changes (vt);
- creating (3) multiple, independently from one another, process models (PM), which describe the effects of setting actions (at) on the state variables (st) of the system, wherein during the controlling (4) of the process within the system one process model (PM) of the multiple, independently from one another, process models (PM) is considered that momentarily best describes effects of setting actions (at) on the state variables (st) of the system; and
- controlling (4) the process within the system by performing setting actions (at) by considering the process model (PM), the interference model (SM) and predetermined controlling goals
wherein during the creation of the multiple, independently from one another, interference models (SM) a distinction is made between effects of short-term interference-based system changes (vt) on the state variables (st) of the system and effects of long-term interference-based system changes (vₜ) on the state variables (vt) of the system, where the distinction between short-term interference-base changes (vt) and long-term interference-based changes (vt) depends on the process within the system and is done by considering the duration of the controlled process in the system; and
wherein the multiple, independently from one another, process models (PM) consider multiple assumed future effects of setting actions (at) on the state variables (st) of the system.

2. Method according to claim 1, wherein the state variables (st) are captured (1) by sensors of the system or a manual and/or automatic sample evaluation.

3. Method according to claim 1 or claim 2, wherein during the creation (2) of the interference models (SM) past interference-based system changes (vₜ) are considered for integration in a temporal context.

4. Method according one of claims 1 to 3, wherein the interference models (SM) are adapted continuously by effects of interference-based system changes (vt) on the state variables (st) of the system.

5. Method according to one of claims 1 to 4, wherein the interference models (SM) are created (2) by a test run of the system and/or by expert knowledge.

6. Method according to one of claims 1 to 5, wherein the interference models (SM) are created (2, 3) by a computer-based neural network and particularly are continuously adapted.

7. Method according to one of claims 1 to 6, wherein the interference models (SM) consider multiple assumed future effects of interference-based system changes (vt) on the state variables (st) of the system.

8. Method according to one of claims 1 to 7, during the creation (3) of the process models (PM) past effects of setting actions (at) on the state variables (st) of the system are considered for integration in a temporal context.

9. Method according to one of claims 1 to 8, wherein the process models (PM) are adapted continuously by effects of setting actions (at) on the state variables (st) of the system.

10. Method according to one of claims 1 to 9, wherein the process models (PM) are created (3) by a test run of the system with at least an exemplary execution of possible setting actions (at) and/or by expert knowledge.

11. Method according to one of claims 1 to 10, the process models (PM) are created (2, 3) by a computer-based neural network and particularly are continuously adapted.

12. Apparatus for executing the method according to one of claims 1 to 11 comprising a system to be controlled with sensors for capturing of state variables (st), actuators for performing setting actions (at) and a control unit, preferably a computing device, connected to the system.

## Revendications

1. Procédé de commande (4) d'un processus de combustion dans une chaudière ou un four ou un processus de broyage dans un dispositif de broyage, comprenant les étapes suivantes :
- la capture (1) de variables d'état (st) du système ;
- la création (2) de multiples modèles d'interférence (SM) indépendamment les uns des autres, qui décrivent les effets des changements du système basé sur des interférences (vt) sur les variables d'état (st) du système, dans lequel pendant la commande (4) du processus à l'intérieur du système, un modèle d'interférence (SM) parmi les multiples modèles d'interférence (SM) indépendamment les uns des autres, est considéré comme la meilleure description momentanée des changements du système basé sur des interférences (vt) ;
- la création (3) de multiples modèles de processus (PM) indépendamment les uns des autres, qui décrivent les effets des actions de réglage (at) sur les variables d'état (st) du système, dans lequel pendant la commande (4) du processus à l'intérieur du système, un modèle de processus (PM) parmi les multiples modèles de processus (PM) indépendamment les uns des autres, est considéré comme la meilleure description momentanée des effets des actions de réglage (at) sur les variables d'état (st) du système ; et
- la commande (4) du processus à l'intérieur du système par l'exécution des actions de réglage (at) en considérant le modèle de processus (PM), le modèle d'interférence (SM) et les objectifs de commande prédéterminés ;
dans lequel pendant la création des multiples modèles d'interférence (SM) indépendamment les uns des autres, une distinction est effectuée entre des effets de changements du système basé sur des interférences (vt) à court terme sur les variables d'état (st) du système et des effets de changements du système basé sur des interférences (vt) à long terme sur les variables d'état (vt) du système, où la distinction entre des changements basés sur des interférences (vt) à court terme et des changements basés sur des interférences (vₜ) à long terme dépend du processus à l'intérieur du système et est effectuée en considérant la durée du processus commandé dans le système ; et
dans lequel les multiples modèles de processus (PM) indépendamment les uns des autres, considèrent de multiples effets futurs présumés des actions de réglage (at) sur les variables d'état (st) du système.

2. Procédé selon la revendication 1, dans lequel les variables d'état (st) sont capturées (1) par des capteurs du système ou une évaluation d'échantillons manuelle et/ou automatique.

3. Procédé selon la revendication 1 ou la revendication 2, dans lequel pendant la création (2) des modèles d'interférence (SM), des changements passés du système basé sur des interférences (vt) sont considérés pour une intégration dans un contexte temporel.

4. Procédé selon une des revendications 1 à 3, dans lequel les modèles d'interférence (SM) sont adaptés en continu par des effets des changements du système basé sur des interférences (vt) sur les variables d'état (st) du système.

5. Procédé selon une des revendications 1 à 4, dans lequel les modèles d'interférence (SM) sont créés (2) par l'exécution d'un test du système et/ou par des connaissances d'expert.

6. Procédé selon une des revendications 1 à 5, dans lequel les modèles d'interférence (SM) sont créés (2, 3) par un réseau neuronal informatique et en particulier sont adaptés en continu.

7. Procédé selon une des revendications 1 à 6, dans lequel les modèles d'interférence (SM) considèrent les multiples effets futurs présumés des changements du système basé sur des interférences (vₜ) sur les variables d'état (st) du système.

8. Procédé selon une des revendications 1 à 7, pendant la création (3) des modèles de processus (PM), des effets passés des actions de réglage (at) sur les variables d'état (st) du système sont considérés pour une intégration dans un contexte temporel.

9. Procédé selon une des revendications 1 à 8, dans lequel les modèles de processus (PM) sont adaptés en continu par des effets des actions de réglage (at) sur les variables d'état (st) du système.

10. Procédé selon une des revendications 1 à 9, dans lequel les modèles de processus (PM) sont créés (3) par l'exécution d'un test du système avec au moins une exécution donnée à titre d'exemple des actions de réglage possibles (at) et/ou par des connaissances d'expert.

11. Procédé selon une des revendications 1 à 10, les modèles de processus (PM) sont créés (2, 3) par un réseau neuronal informatique et en particulier sont adaptés en continu.

12. Appareil d'exécution du procédé selon une des revendications 1 à 11 comprenant un système à commander par des capteurs pour capturer des variables d'état (st), des actionneurs pour effectuer des actions de réglage (at) et une unité de commande, de préférence un dispositif informatique, connectée au système.
